# EUROPEAN PATENT APPLICATION

(11) **EP 1 643 037 A1**
(43) Date of publication of application: **05.04.2006**
(21) Application number: 03785988.1
(22) Date of filing: 30.12.2003
(51) Int. Cl.: E02B 15/10, B63B 35/32

(54) **MACHINE FOR REMOVING FLOATING REFUSE FROM THE SURFACE OF WATER**

(30) Priority: 27.02.2003 ES 200300132
(71) Applicant: Galan Cavadas, Jesus, 29640 Fuengirola (Malaga) (ES)
(72) Inventor: Galan Cavadas, Jesus, 29640 Fuengirola (Malaga) (ES)
(86) International application number: PCT/ES2003/000670
(87) International publication number: WO 2004/076750

(57) **Abstract**

Machine for removing floating refuse from the surface of water. The invention relates to a machine for removing floating refuse from the surface or water, which can be used to remove both solid floating refuse (tar, crude oil and plastics) and liquids floating refuse (oils and fats) from the surface of the sea, rivers and lakes. The inventive machine consists of a structure (1), comprising an endless conveyor belt (2) and a wheel (3) with paddles (21) which strike the water. Said machine is fixed to the side of a boat (20) such that the end thereof nearest the bow is immersed in the water (20 or 30 cm), said end comprising a filter-comb (18), while the end thereof nearest the stem is suspended at a height, said end comprising a brush-roller (11). In addition, a hopper (4) is provided which is inclined toward the interior of the boat in order to collect the refuse.

According to the invention, the fixed pinion (5) of the above-mentioned wheel (3) meshes with the fixed double pinion (6) of the roller closest to the shaft (13). Moreover, a chain (7) connects said fixed double pinion (6) with the fixed double pinion (8) of the roller at the upper end of the belt (2). The fixed double pinion (8) of the upper roller meshes with a second pinion (not fixed) (9) and the latter meshes with a third fixed pinion (10) the shaft of which supports the brush-roller (11).

## Description

Machine for removing floating refuse from the surface of water, which can be used to remove both floating solid refuse (tar, crude oil and plastics) and floating liquids refuse (oils and fats) from the surface of the sea, rivers and lakes.

There are several inventions designed for removing floating refuse from water, in ports, rivers, marshes, lakes and coastal areas. Soporisation system, with metallic or net salabards and with water aspersion system.

The flow of people to the coastal zones, holiday makers and residents, contributes to the deterioration of the quality of water, and this makes the infrastructures become insufficient, especially the infrastructure for the residual water, and this is the real problem of the deterioration of the quality of water in rivers, lakes and the sea, due to the poor recyclation methods of the residual water, makes that this water with refuse goes directly to the rivers and at the end to the sea.

On the other hand, the uncontrolled spillage of refuse the big vessels, especially the crude transporters and hazardous products transporters, that clean their tanks in the open sea, and with the passing of the time, the action of tides and the wind, this uncontrolled spillage reaches the coast, endangering not only man, but also animals, fishes and birds.

The invention relate to a machine for removing floating refuse from the surface of the sea, river or lake, functions without a motor, and its motive power is the resistance of the wheel (3) to the water, which makes the conveyor belt (2) move. The maximum draught of the machine is 20 cm.

The machine consists of a structure (1) made of wood, metal or polyester; comprising an endless conveyor belt (2) and a wheel (3) with paddles (21) which strike the water. Said machine is fixed to the side of a boat by two cranes (20), such that the end nearest the bow is immersed in the water (20 or 30 cm), said end comprising a filter-comb (18), while the end nearest the stem is suspended at a height. In addition, a hopper (4) is provided which is inclined toward the interior of the boat in order to collect the refuse.

The belt (2) is supported by several parallel cylinders (27) with bearings (26) in both sides to fortify it and avoid the resistance of friction. The belt is perforated all along, and when removing solid floating refuse, the water is filtered and solids remain on the belt. The machine incorporate a brush-roller (11) situated under and parallel to the last superior roller of the belt (2); when solid refuse arrives to the upper end of the belt (2), this are swept by the brush-roller (11) toward the hopper (4), and at the same time the belt (2) is kept clean. At the inferior part of the belt, the machine incorporate the filter-comb (18) that filters the surface of water and solid refuse passes to the belt by the same pressure of the water.

Part of the filter-comb (18) goes into the water and with its teeth (28) pointing up and inclined toward the belt and a bit over it. The extreme of each tooth (28) incorporates flexible beards (19) that touch the belt (2); the mission of these beards (19) is to filter the water that returns from the belt and to prevent the small solid refuse from going back into the sea, river or lake.

When removing floating liquid refuse, the belt (2) is not perforated and incorporates pitchers (12) that are stuck transversally to the belt, which pick up the liquid and spill it into the hopper (4). When the pitchers (12) pass over the water surface, they pick up oil and water mixed together which passes through the hopper (4) to a container in the boat. Oil floats and water stays under; the container has a valve in its inferior part that pours clean water back to the sea, river or lake. Oil by decant and a system of communicates tubes goes to another container where we store it. The pitchers (12) have in their interior separate cells to prevent the liquid not to go out, when the machine is moving by the effect of the waves.

When removing liquid floating refuse, we change the perforated belt for the belt with pitchers, and we take the brush-roller (11) and the filter-comb (18) out of the machine, to allow free way to the pitchers (12).

According to the invention, the fixed pinion (5) of the wheel (3) meshes with the fixed double pinion (6) of the roller closest to the shaft (13). Moreover, a chain (7) connects said fixed double pinion (6) with the fixed double pinion (8) of the roller at the upper end of the belt (2). The fixed double pinion (8) of the upper roller meshes with a second pinion (not fixed) (9) and the latter meshes with a third fixed pinion (10) the shaft of which supports the brush-roller (11). The pinion (5) of the wheel (3) is bigger (e.g. 30 teeth); the pinion (6) of the belt is smaller (e.g. 10 teeth). When the wheel turns once, the pinion (6) of the belt turns 3 times. The proportion of teeth in both pinions can be changed, depending on whether we want the belt (2) to go faster or slower.

When the boat moves forward, the paddles (21) strike the water and make the wheel (3) turn; this action makes the pinion 6 and 8 of the rollers and the belt (2) turn off the wheel. All floating refuse found in its way will be collected by the belt (2) and taken to the hopper (4).

The machine is fixed to the side of a boat by two parts with cranes; the end nearest the stem is suspended at a height with a pin (13) that makes the machine pivot by the effect of the waves, keeping the inferior part of the belt in the water. The part nearest the bow has a support like an inverted U (16) attached to the boat by a crane (20) that allows the structure to move up and down with the waves, due to the floating (14 and 25); a robe (22) joins the support in U with the bow. The crane (20) near the bow has a spring (17), to protect the machine from the strong movement of the boat due to the effect of the waves.

If we lengthen the inferior part of the machine and we submerge it to 1m, 2m, 3m; it would detect the submerged crude oil. We shall do this with a more perforated belt, to make less resistance under the water.

If we make a bigger machine; instead of moving the belt (2) with the wheel (3), we can use a motor attached to the shaft of the belt, or the same motor of the boat with pulleys prepared for this purpose. We can also use a motor in the standard machine as well.

In the open sea we can also use floating barriers ahead of the machine, like this: two floating barriers, each one pulled by a boat, we join the two free sides of the floating barriers, leaving a small space in between, we get a figure like a funnel, this will concentrate the floating refuse in the narrow part of the funnel and picked up by the machine.

We can fix the machine to a motor boat, to a sailing boat, to a catamaran, to a floating platform to a pedal boat and to boats managed by remote control (without crew), this to be used in dangerous places, such as near cliffs with strong sea or with waves breaking on the shore.

In shallow waters where we can walk, we can use a small model of the machine on a floating platform and push it with our hands, the wheel (3) turns, by the resistance of the paddles (21) to the water, and the machine will work.

We can use the machine in rivers; we fix the machine to one side of the river, the current will push the paddles (21) and make the wheel (3) turn and the machine work. In this case we prolong the exterior gather arm (15) to the centre of the river as much as we want, and tie it to the river sides, as it is so long, that the strong river stream could break it.

In ports, where tidal streams are important, we fix the machine to a pier and the same current produced by rise and fall of the level of the sea makes the machine work.

### Machine components parts

- 1 -: Structure
- 2 -: Endless conveyor belt
- 3 -: Wheel
- 4 -: Hopper
- 5 -: Wheel pinion
- 6 -: Belt roller pinion
- 7 -: Chain
- 8 -: Belt roller pinion
- 9 -: Not fixed pinion (between pinion 9 and pinion 10)
- 10 -: Brush-roller pinion
- 11 -: Brush-roller
- 12 -: Pitcher
- 13 -: Superior support pin
- 14 -: Floating (under the filter comb)
- 15 -: Gather arms
- 16 -: Support (inverted U)
- 17 -: Spring
- 18 -: Filter-comb
- 19 -: Beards
- 20 -: Cranes
- 21 -: Paddles
- 22 -: Support robe
- 23 -: Stern support
- 24 -: Filters
- 25 -: Gather arms floating
- 26 -: Bearings
- 27 -: Cylinder
- 28 -: Filter-comb tooth

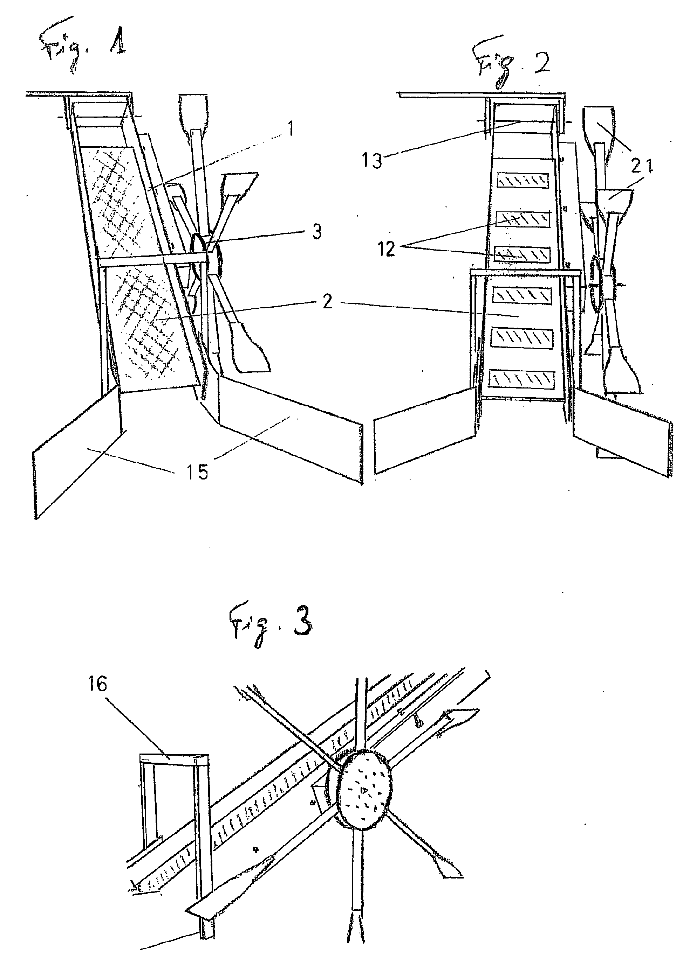

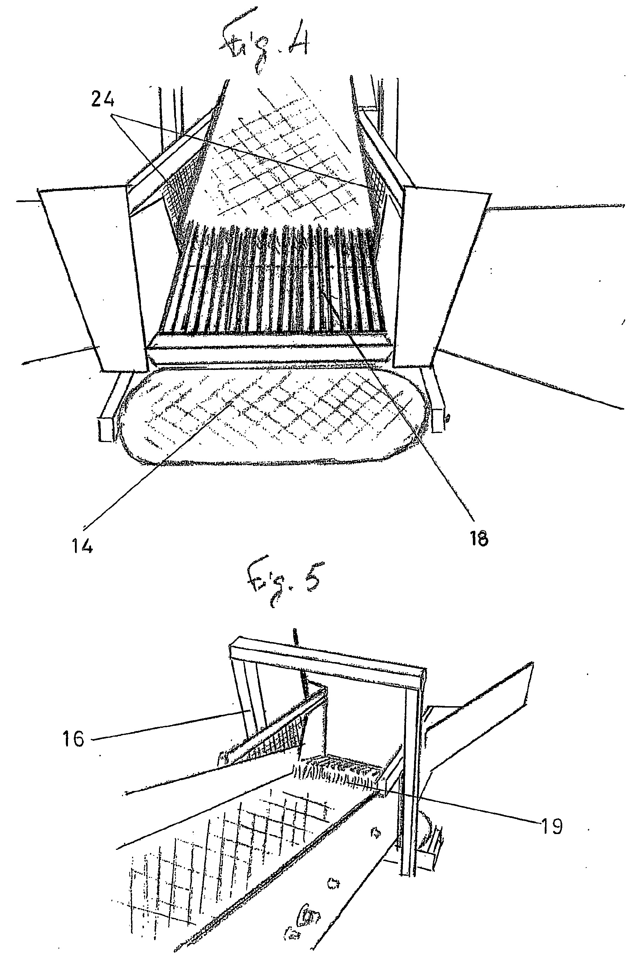

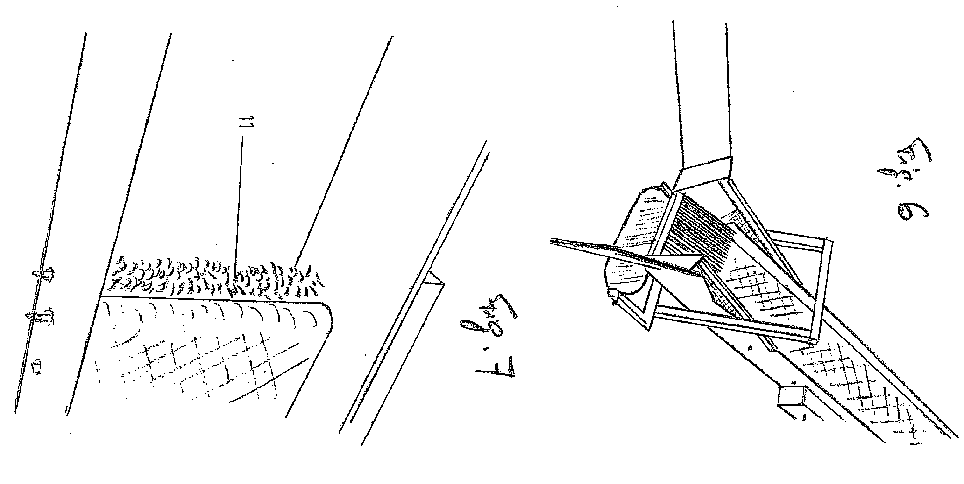

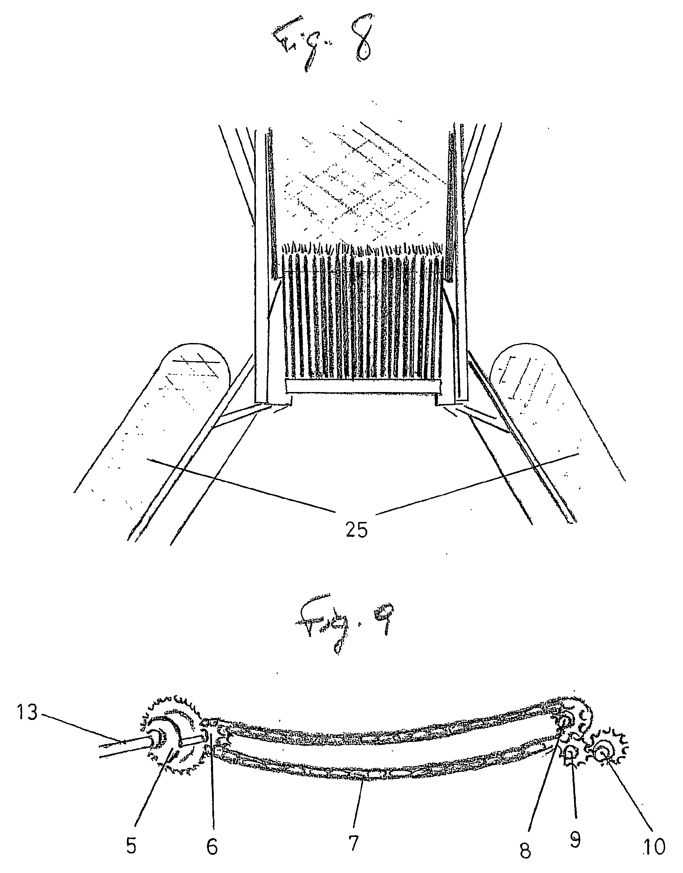

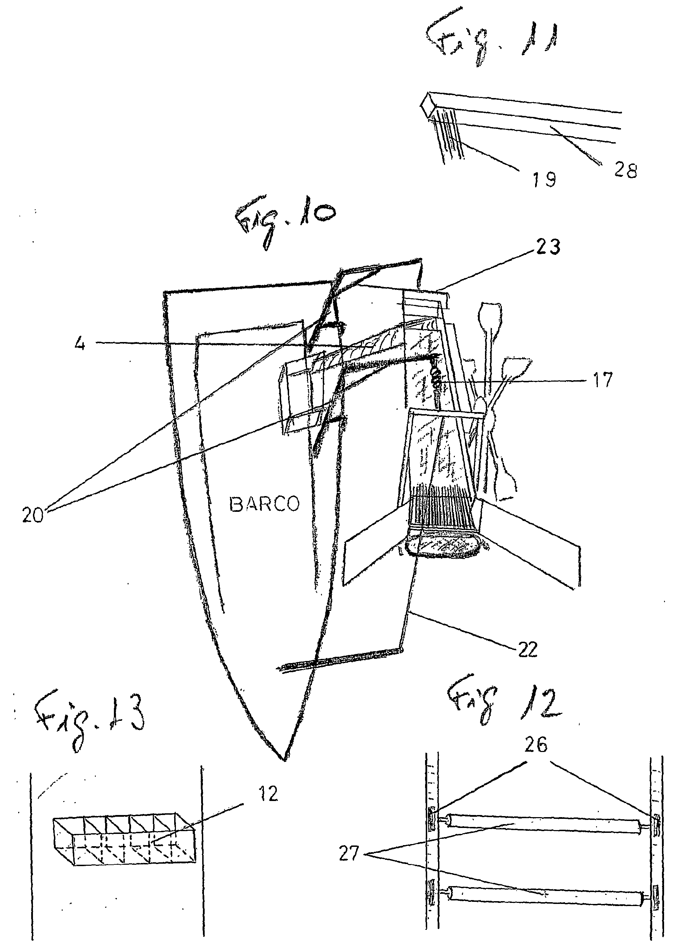

## Claims

1. Machine for removing floating refuse from the surface of water, which can be used to remove both, floating solid refuse (tar, crude oil and plastics) and floating liquids refuse (oils and fats) from the surface of the sea, rivers and lakes, **characterized by** a structure (1) made of wood, metal or polyester; with an endless conveyor belt (2) and a wheel (3) with paddles (21) which strike the water, said machine do not have a motor and it is fixed to the side of a boat by two cranes (20), such that the end nearest the bow is immersed in the water (20 or 30 cm), said end comprising a filter-comb (18), while the end nearest the stem is suspended at a height, said end comprising a brush-roller (11). In addition, a hopper (4) is provided which is inclined toward the interior of the boat in order to collect the refuse. The belt (2) is supported by several parallel cylinders (27) with bearings (26) on both sides, to fortify and avoid the resistance of friction. The belt (2) is perforated all along and when removing floating solid refuse, the water is filtered and solids remain on the belt.

2. Machine for removing floating refuse from the surface of water, both solids and liquids, in the sea, rivers or lakes, **characterized by** its brush-roller (11) the shaft of which is situated under and parallel to the last superior roller of the belt (2); when solid refuse arrives to the superior part of the belt (2) it is swept by the brush-roller (11) to the hopper (4), at the same time the belt (2) is kept clean.

3. Machine for removing floating refuse from the surface of water, both solids and liquids, in the sea, rivers or lakes, according to claim 1, **characterized by** its filter-comb (18), that combs the surface of the water and solid refuse passes to the belt by the same pressure of the water. Part of the filter-comb goes into the water and with its teeth (28) pointing upwards and inclined toward the belt and a bit over it. The extreme of each tooth (28) incorporates flexible beards (19) that touch the belt (2). The purpose of these beards is to filter the water coming back from the belt and to prevent the small solid refuse from going back to the sea, river or lake.

4. Machine for removing floating refuse from the surface of water, both solids and liquids, in the sea, rivers or lakes, **characterized by** the fact that for removing floating liquids refuse, the belt is not perforated and incorporates pitchers (12) transversally stuck to the belt (2) which pick up the liquid and pour it into the hopper (4). When the pitchers pass over the water surface, they pick up oil and water mixed together which passes through the hopper to a container in the boat. Oil floats and water stays under; the container has a valve in its inferior part that pours clean water back to the sea, river or lake. Oil by decant and a system of communicating tubes goes to another container where we store it. The pitchers have in their interior, separate cells, to prevent the liquid go out when the machine is moving by the effect of the waves.

5. Machine for removing floating refuse from the surface of water, both solids and liquids, in the sea, rivers or lakes, according to claim 1, **characterized by** an easy mechanism. The fixed pinion (5) of the wheel (3) meshes with the fixed double pinion (6) of the roller closest to the shaft (13). Moreover, a chain (7) connects said fixed double pinion (6) with the fixed double pinion (8) of the roller at the upper end of the belt (2). The fixed double pinion (8) of the upper roller meshes with a second pinion (not fixed) (9) and the latter meshes with a third fixed pinion (10) the shaft of which supports the brush-roller (11).

6. Machine for removing floating refuse from the surface of water, both solids and liquids, in the sea, rivers or lakes, according to previous claims, **characterized by** when the boat moves forward, the paddles (21) resist the water and this makes the wheel (3) turn. Pinions 6 and 8 of the roller and the belt (2) turn opposite to the wheel. All floating refuse will be picked up by the belt and deposited into the hopper (4).

7. Machine for removing floating refuse from the surface of water, both solids and liquids, in the sea, rivers or lakes, according to claim 1, **characterized** because it can be adapted to any type of boat or floating platform. The maximum draught of the machine is 20 cm.

8. Machine for removing floating refuse from the surface of water, both solids and liquids, in the sea, rivers or lakes, according to previous claims, **characterized** because in shallow water, where we can walk, (in beaches where we can stand up) a smaller machine can be used and by fixing it to a floating platform, we can push it with our hands.
